Europäisches Patentamt

European Patent Office

Office européen des brevets

(19)

(11) Numéro de publication: **0 267 086 B1**

(12) # FASCICULE DE BREVET EUROPEEN

(45) Date de publication de fascicule du brevet:
**25.09.91**

(51) Int. Cl.⁵: **G05D 1/08**, B64G 1/36,
G01S 3/78

(21) Numéro de dépôt: **87402280.9**

(22) Date de dépôt: **13.10.87**

(54) **Sonde spatiale pourvue d'un dispositif de pointage d'une antenne vers la terre.**

(30) Priorité: **16.10.86 FR 8614376**

(43) Date de publication de la demande:
**11.05.88 Bulletin 88/19**

(45) Mention de la délivrance du brevet:
**25.09.91 Bulletin 91/39**

(84) Etats contractants désignés:
**AT BE CH DE ES FR GB GR IT LI LU NL SE**

(56) Documents cités:
**DE-A- 3 203 006**
**FR-A- 2 365 153**
**US-A- 3 424 907**
**US-A- 3 427 453**

(73) Titulaire: **CENTRE NATIONAL D'ETUDES SPA-
TIALES**
**2, Place Maurice Quentin**
**F-75001 Paris(FR)**

(72) Inventeur: **Moura, Denis**
**13 rue Deville**
**F-31000 Toulouse(FR)**

(74) Mandataire: **Mongrédien, André et al**
**c/o BREVATOME 25, rue de Ponthieu**
**F-75008 Paris(FR)**

## Description

La présente invention a pour objet une sonde spatiale pourvue d'un dispositif de pointage d'une antenne vers la Terre.

Le maintien des radiocommunications entre la Terre et les sondes spatiales évoluant dans le système solaire impose qu'une antenne de la sonde soit pointée vers la Terre avec une précision qui dépend de son lobe de rayonnement.

Les sondes spatiales actuellement connues comprennent une antenne orientable sur la sonde elle-même. Il faut donc prévoir un mécanisme d'orientation qui prend un volume relativement important.

Il existe aussi des véhicules spatiaux qui comprennent une antenne fixe, qui est alors pointée périodiquement vers la Terre par l'intermédiaire de rotations imprimées au véhicule. Dans le brevet DE-A-3 203 006 au nom de la Société Teldix, un satellite en orbite autour de la Terre est ainsi orienté à l'aide tout d'abord d'un capteur d'horizon terrestre, puis à l'aide d'une balise terrestre pour parfaire l'orientation. Cette solution se rapporte toutefois à des problèmes techniques différents de ceux qui se posent pour une sonde spatiale : un satellite terrestre nécessite des réajustements permanents de son orientation à cause de la rapidité de parcours de son orbite ; de plus, il reste toujours en vue de la Terre, tandis qu'une sonde spatiale peut voir la Terre cachée par le Soleil. La mesure est alors impossible, ce qui rend le pilotage plus complexe. D'ailleurs, la Terre n'est vue que comme un point faiblement lumineux au cours de la plus grande partie de la mission de la sonde, et il est donc de toute façon nécessaire d'utiliser un capteur de nature différente.

Le document US-A-3 427 453 au nom de la société RCA décrit un satellite en orbite autour de la Terre dans lequel un capteur d'horizon terrestre fixé sur une partie tournante du satellite fournit les informations nécessaires à l'orientation d'une antenne. Ce capteur peut être remplacé temporairement par un capteur solaire ou stellaire quand le Soleil point à l'horizon et sature par son éclat le capteur d'horizon terrestre.

L'invention consiste par contre à effectuer un pointage d'une antenne fixe vers la Terre sans repérer directement celle-ci. La sonde comprend une antenne directive fixée rigidement, un capteur sensible au rayonnement solaire, au moins deux ensembles aptes à exercer des couples sur la sonde autour d' axes non parallèles entre eux et non parallèles à la direction de l'antenne, et un calculateur. Elle se caractérise en ce que le capteur sensible au rayonnement solaire est orienté parallèlement à l'antenne, en ce qu'elle comprend un capteur sensible au rayonnement d' une étoile différente du Soleil, et en ce que le calculateur est relié aux capteurs et apte à connaître à tout moment dans un repère fixe la position du Soleil, la position de la Terre, la position de la sonde, et à calculer dans un repère lié à la sonde la direction du Soleil, de l'étoile et de la Terre ; ainsi que les rotations à imprimer à la sonde pour pointer l'antenne vers la Terre.

L'invention sera mieux comprise d'après le commentaire des figures données en annexe à titre illustratif et non limitatif, d'après lesquelles :
- la figure 1 représente la disposition des corps célestes impliqués dans l'opération de pointage ;
- la figure 2 représente la sonde spatiale équipée d'après l'invention ; et
- la figure 3 illustre une mise en oeuvre possible de l'invention.

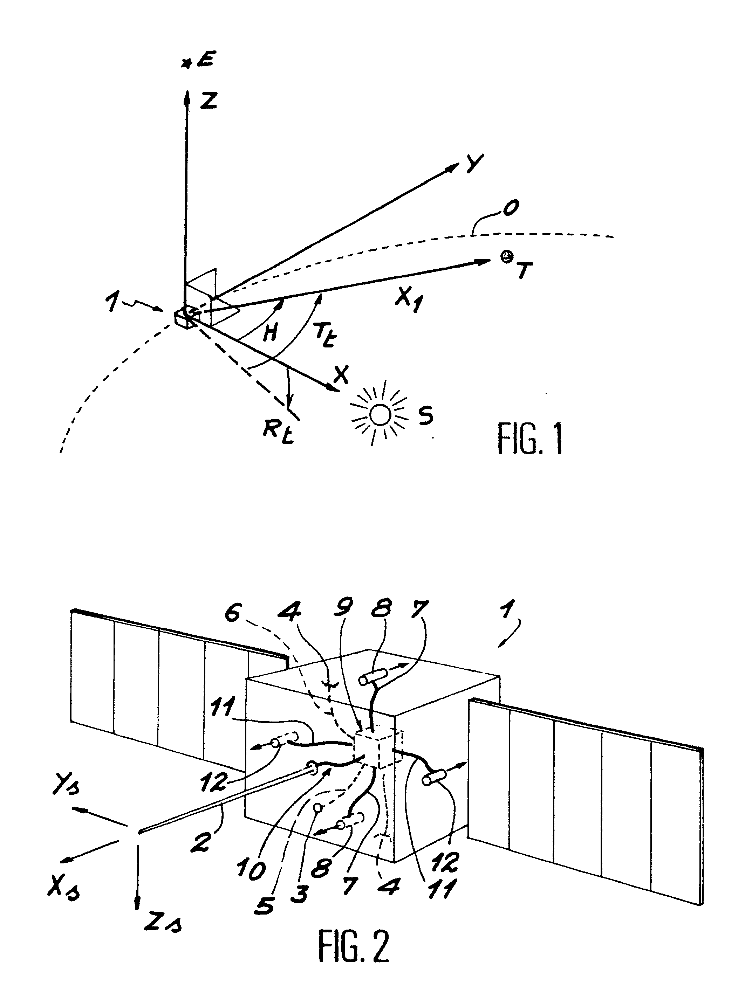

D'après la figure 1, la sonde spatiale 1 parcourt une orbite 0 sensiblement dans le plan de l'écliptique. La Terre est indiquée par T, le Soleil par S et une étoile de référence par E. Avec pour origine la sonde 1, on définit un repère R dont l'axe X est dirigé vers le Soleil S et l'axe Z vers l'étoile E. De façon commode, on peut choisir l'étoile E de telle sorte que l'axe Z soit perpendiculaire au plan de l'écliptique ; ce choix n'est cependant pas nécessaire.

L'axe Z une fois obtenu, on se fixe un axe Y tel que le repère R composé des axes X, Y et Z soit direct.

Deux autres repères directs, ayant également pour origine la sonde 1, sont $R_1$ et $R_s$ qui possèdent les axes $X_1$, $Y_1$, $Z_1$ et $X_s$, $Y_s$ et $Z_s$ respectivement. Le repère $R_1$ est déduit du repère R par une rotation $R_t$ autour de l'axe Y, puis par une rotation $T_t$ autour de l'axe Z telles que l'axe $X_1$ soit pointé vers la Terre T. Le repère $R_s$ représenté figure 2 est lié à la géométrie de la sonde 1 et choisi tel que l'axe $X_s$ soit parallèle à l'antenne 2 de télécommunication à pointer vers la Terre T ; l'orientation des autres axes est quelconque.

Il s'agit donc d'orienter la sonde 1 de telle façon que l'axe $X_s$ reste pointé vers la Terre T. Les équipements nécessaires ont été représentés figure 2.

Ils comprennent tout d'abord un ou plusieurs capteurs de rayonnement solaire 3 de type ordinaire dont le nombre et la répartition dépendent de l'angle solide vu de la sonde 1 où le Soleil S peut se trouver. Cet angle peut être assez petit dans le cas d'une sonde 1 explorant la périphérie du système solaire, car l'angle H de la figure 1 entre la Terre T, la sonde 1 et le soleil S reste alors petit, et l'orientation qu'il faut conférer aux capteurs de rayonnement solaire 3 est alors à peu près parallèle à celle de l'antenne 2.

Le nombre des capteurs 3 dépend encore de leurs champs de vue et de leur montage sur la sonde 1 : il est généralement plus élevé si les capteurs 3 sont montés fixes, plus réduit si les capteurs 3 sont orientables. Ici, on suppose que la sonde 1 est de forme générale cubique et possède un capteur 3 sur la face portant également l'antenne 2, ainsi que deux capteurs de rayonnement stellaire 4 de l'étoile E sur les faces orthogonales à $Z_s$ . Pour ces capteurs 4 on pourra également adopter diverses dispositions selon leur constitution, la position de l'étoile E et l'orbite de la sonde 1.

Concrètement, on peut employer comme capteur solaire 3 une série de barrettes photosensibles commercialisées par Matra Espace et comprenant quelques milliers de photodiodes. Le champ de vue embrassé peut atteindre ±60° autour d'un ou deux axes. La précision des mesures est meilleure que 0,02° .

Matra Espace associé à Sodern commercialise également des capteurs stellaires applicables pour l'invention ; ces capteurs peuvent repérer des étoiles de magnitude 0 à 8 sur un champ de vue de 7,5°x10° Le temps d'acquisition est de quelques secondes.

Ces capteurs pèsent chacun quelques kilogrammes et consomment quelques dizaines de watts lors des mesures. Ils sont donc d'emploi commode.

Chacun de ces capteurs de rayonnement solaire 3 et stellaire 4 est relié par un câblage électrique (respectivement 5 et 6) à un calculateur embarqué 9 qui est apte à déterminer la position du Soleil S et de l'étoile E, donc du repère R, par rapport à la sonde 1, donc au repère $R_s$. Le calculateur 9 contient les informations (éphémérides et/ou modèle mathématique) qui lui permettent de connaître la position de la sonde 1, de la Terre T et du Soleil S dans un repère fixe. Ces informations peuvent également lui être fournies directement par la station de pilotage située sur la Terre par l'intermédiaire de l'antenne 2 et d'une connexion 10.

Le calculateur 9 est également apte à calculer les valeurs de rotation $R_t$ et $T_t$ autour de Y et Z pour passer du repère R au repère $R_1$, et les rotations $R_s$, $T_s$ et $L_s$ autour de Y, Z et X pour passer du repère R au repère $R_s$. Il est alors aisé de déterminer quelles sont les valeurs des rotations de roulis autour de l'axe $Y_s$ et de tangage autour de l'axe $Z_s$ qu'il faut imprimer à la sonde 1 pour faire coïncider les axes $X_s$ et $X_1$ et ainsi réaliser la pointage souhaité. Ces rotations sont réalisées par des moyens classiques à bord des véhicules spatiaux tels que des roues d'inertie ou à réaction ou des propulseurs à éjection de gaz que l'on représente ici.

Deux propulseurs 8 sont actionnés par le calculateur 9 par l'intermédiaire de connexions 7 et soumettent la sonde 1 à un couple qui opère la rotation de roulis nécessaire ; deux propulseurs 12 reliés au calculateur 9 par des connexions 11 jouent le même rôle pour la rotation de tangage.

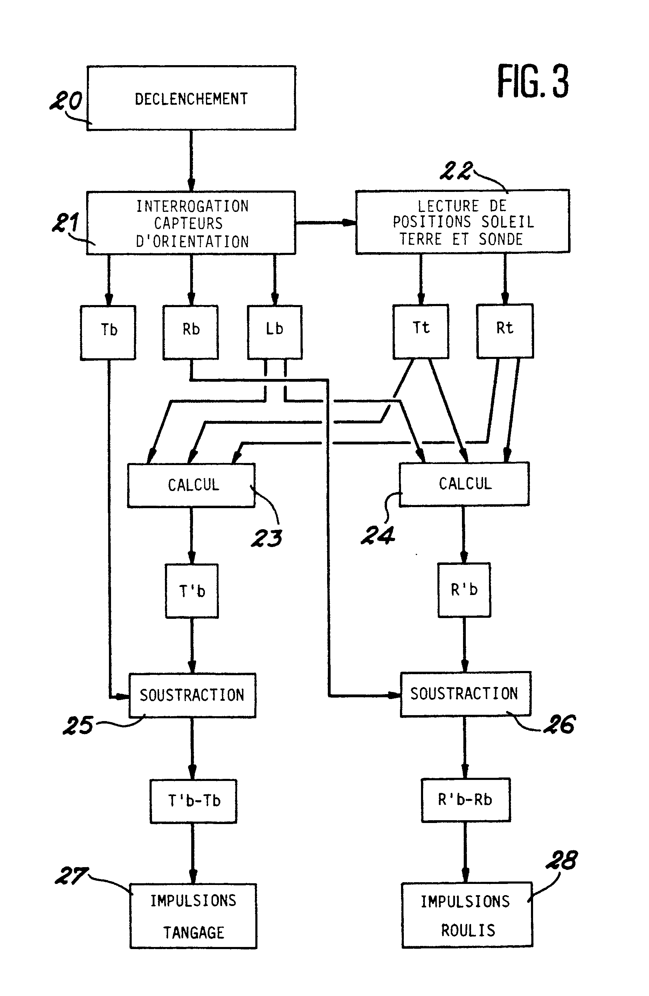

Une mise en oeuvre concrète de ce procédé est illustrée par la figure 3. Une décision de déclenchement 20 est tout d'abord communiquée au calculateur 9 à partir de la Terre ou automatiquement par une horloge embarquée. Le calculateur 9 procède à une interrogation 21 des capteurs solaire 3 et stellaire 4 pour en déduire les biais de tangage $T_b$, de roulis $R_b$ et de lacet $L_b$ qui caractérisent l'orientation de la sonde 1 à l'instant considéré. Plus précisément, les biais correspondent aux angles qu'il faudrait imprimer respectivement à la sonde 1 autour des axes $Z_s$, $Y_s$ et $X_s$ pour pointer $X_s$ vers le Soleil S et $Z_s$ vers l'étoile E. Le biais de tangage $T_b$ est obtenu à l'aide du capteur solaire 3, le biais de lacet $L_b$ à l'aide du capteur stellaire 4 et le biais de roulis $R_b$ à l'aide de l'un ou l'autre de ces capteurs.

Parallèlement, le calculateur 9 procède à une lecture 22 des positions de la Terre T, du Soleil S et de la sonde 1 dans un repère inertiel à l'aide d'informations stockées en mémoire ou communiquées partir de la Terre. Ces positions peuvent également être calculées à bord par le calculateur 9. Il en déduit les angles $R_t$ et $T_t$ définis plus haut qui permettent d'obtenir la direction de la Terre T à partir de celle du Soleil S.

Deux calculs 23 et 24 sont alors effectués :
(23) $T'_b$ = Arc sin (sin $L_b$.sin $R_t$)-Arc sin (cos $L_b$. sin $T_t$), (24) $R'_b$ $_b$ = -Arc sin (cos $L_b$. sin $R_t$)-Arc sin (sin $L_b$. sin $T_t$), où $T'_b$ et $R'_b$ sont les biais de tangage et de roulis qu'il faudrait réaliser pour pointer exactement l'antenne 2 vers la Terre T à partir de l'orientation de la sonde à l'instant considéré. Le calculateur effectue par conséquent deux soustractions 25 et 26 : (25) $T'_b$-$T_b$ et (26) $R'_b$-$R_b$ car les différences correspondent aux angles de tangage et de roulis qu'il faut imprimer à la sonde 1 pour, à partir de son orientation actuelle, orienter l'antenne 2 vers la Terre T. Ces différences sont donc converties en impulsions 27 et 28 de fonctionnement respectivement aux propulseurs 12 et 8 par le calculateur 9. Bien entendu, on peut déterminer, en fonction du lobe de rayonnement de l'antenne 2, un seuil d'action au-dessous duquel les corrections d'orientation sont jugées inutiles et ne sont pas effectuées.

On constate donc que, par rapport aux dispositifs de l'art antérieur, le dispositif revendiqué permet de se passer d'un mécanisme encombrant et délicat d'orientation de l'antenne par rapport à la sonde. L'instrumentation nécessaire peut être réduite : si la sonde s'éloigne vers la périphérie du système solaire, un capteur solaire 3 unique pourra dans de nombreux cas être retenu, et il sera alors orienté dans la direction de l'antenne 2 ; de plus, dans le cas d'une sonde stabilisée trois axes, on pourra également se contenter d'une instrumentation légère en capteurs stellaires 4, car l'étoile E sera alors avantageusement choisie dans une direction perpendiculaire au plan de l'écliptique et une même face de la sonde sera toujours orientée vers cette étoile E.

Toutefois, l'invention s'applique également aux sondes spatiales non stabilisées en lacet.

Bien entendu, le pointage de l'antenne selon l'invention peut aussi être effectué vers d'autres corps célestes que la Terre et notamment vers d'autres vaisseaux spatiaux.

**Revendications**

1. Sonde spatiale (1) comprenant une antenne directive (2) fixée rigidement, un capteur (3) sensible au rayonnement solaire, au moins deux ensembles (8, 12) aptes à exercer des coup les sur la sonde autour d' axes (Y, Z) non parallèles entre eux et non parallèles à la direction ($X_s$) de l'antenne, un calculateur (9), caractérisée en ce que le capteur (3) sensible au rayonnement solaire est orienté parallèlement à l'antenne (2), en ce qu'elle comprend un capteur (4) sensible au rayonnement d'une étoile (E) différente du Soleil, et en ce que le calculateur est relié aux capteurs (3,4) et apte à connaître à tout moment dans un repère fixe la position du Soleil (S), la position de la Terre, la position de la sonde, et à calculer dans un repère lié à la sonde (1) la direction du Soleil, de l'étoile et de la Terre ; ainsi que les rotations à imprimer à la sonde pour pointer l'antenne (2) vers la Terre (T).

2. Sonde spatiale suivant la revendication 1, caractérisée en ce que l'étoile (E) est située dans une direction perpendiculaire au plan de l'écliptique.

3. Sonde spatiale suivant la revendication 2, caractérisée en ce qu'elle est stabilisée en lacet et que le capteur (4) sensible au rayonnement de l'étoile (E) est orienté orthogonalement à l'antenne (2) et fixe par rapport à l'antenne.

4. Sonde spatiale suivant l'une quelconque des revendications 1 à 3, caractérisée en ce que les axes autour desquels s'exercent les coup les sont orthogonaux entre eux et par rapport à la direction de l'antenne.

**Claims**

1. Space probe (1) comprising a rigidly fixed directional antenna (2), a sensor (3) sensitive to the solar radiation, at least two assemblies (8, 12) capable of exerting torques on the probe about axes (Y, Z) which are not parallel to one another and not parallel to the direction ($X_s$) of the antenna, and a computer (9), characterised in that the sensor (3) sensitive to the solar radiation is oriented parallel to the antenna (2), in that it comprises a sensor (4) sensitive to the radiation of a star (E) different from the sun, and in that the computer is connected to the sensors (3, 4) and capable of sensing at any time in a fixed reference system the position of the sun (S), the position of the earth, and the position of the probe, and of computing in a reference system linked to the probe (1) the direction of the sun, of the star and of the earth, as well as the rotations to be impressed upon the probe in order to aim the antenna (2) towards the earth (T).

2. Space probe according to Claim 1, characterised in that the star (E) is situated in a direction perpendicular to the plane of the ecliptic.

3. Space probe according to Claim 2, characterised in that it is stabilised in yaw and in that the sensor (4) sensitive to the radiation of the star (K) is oriented orthogonally to the antenna (2) and fixed in relation to the antenna.

4. Space probe according to any one of Claims 1 to 3, characterised in that the axes about which the torques are exerted are orthogonal to one another and in relation to the direction of the antenna.

**Patentansprüche**

1. Raumsonde (1) mit einer starr angebrachten Richtantenne (2), einem auf Solarstrahlung empfindlichen Aufnehmer (3), wenigstens zwei Gruppen (8,12), die dazu geeignet sind, Drehmomente auf die Sonde um Achsen (Y,Z) auzuüben, die zueinander nicht parallel sind und die nicht zur Richtung ($X_S$) der Antenne parallel sind, einen Rechner (9), dadurch gekennzeichnet, daß der auf die Solarstrahlung empfindliche Aufnehmer (3) parallel zur Antenne (2) ausgerichtet ist und daß sie einen Aufnehmer (4) enthält, der auf die Strahlung eines von der Sonne verschiedenen Sterns (E) empfindlich ist und daß der Rechner mit den Aufnehmern (3,4) verbunden und dazu eingerichtet ist, in jedem Augenblick in einem festen Bezugssystem die Position der Sonne (S), der Erde und der Sonde zu erkennen und in einem auf die Sonde (1) bezogenen Bezugssystem die Richtung der Sonne, des Sterns und der Erde sowie der der Sonne zu vermittelnden Drehungen zum Ausrichten der Antenne (2) gegen die Erde (T) zu berechnen.

2. Raumsonde nach Anspruch 1, **dadurch gekennzeichnet,** daß der Stern (E) in einer zur Ebene der Ekliptik senkrechten Richtung liegt.

3. Raumsonde nach Anspruch 2, dadurch gekennzeichnet, daß sie gierstabilisiert ist und daß der auf die Strahlung des Sterns (E) empfindliche Aufnehmer (4) orthogonal zur Antenne (2) gerichtet und gegenüber der Antenne festgelegt ist.

4. Raumsonde nach einem der Ansprüche 1 bis 3, dadurch gekennzeichnet, daß die Achsen, um die die Drehmomente wirken, zueinander und zur Richtung der Antenne orthogonal sind.

FIG. 1

FIG. 2

FIG. 3

**20** DECLENCHEMENT

**21** INTERROGATION CAPTEURS D'ORIENTATION

**22** LECTURE DE POSITIONS SOLEIL TERRE ET SONDE

Tb  Rb  Lb  Tt  Rt

**23** CALCUL

**24** CALCUL

T'b

R'b

**25** SOUSTRACTION

**26** SOUSTRACTION

T'b-Tb

R'b-Rb

**27** IMPULSIONS TANGAGE

**28** IMPULSIONS ROULIS

7